# EUROPÄISCHE PATENTSCHRIFT

(11) **EP 0 529 380 B1**
(45) Veröffentlichungstag und Bekanntmachung des Hinweises auf die Patenterteilung: **29.01.1997**
(21) Anmeldenummer: 92113549.7
(22) Anmeldetag: 08.08.1992
(51) Int. Cl.: B23D 17/06, E02F 3/96, B26D 7/26

(54) **Abbruchzange**
Breaking tool
Outil à casser

(30) Priorität: 27.08.1991 DE 4128300; 18.03.1992 DE 4208651
(43) Veröffentlichungstag der Anmeldung: 03.03.1993
(73) Patentinhaber: Krupp Bautechnik GmbH, 45356 Essen (DE)
(72) Erfinder: Bartels, Robert-Jan, Dr.-Ing., W-4300 Essen 17 (DE); Näfe, Helmar, Dipl.-Ing., W-4300 Essen 1 (DE)
(74) Vertreter: John, Ernst, Dipl.-Ing.

(56) Entgegenhaltungen:
- CH-A- 320 348
- DE-A- 2 430 028
- DE-A- 3 832 087
- FR-A- 2 549 753
- US-A- 4 802 495
- US-A- 4 897 921

## Beschreibung

Die Erfindung betrifft eine Abbruchzange mit relativ zueinander beweglich angetriebenen Zangenbacken, deren außenliegender Endabschnitt jeweils zumindest einen in Richtung auf die gegenüberliegende Zangenbacke weisenden Vorsprung aufweist und die im Anschluß daran jeweils mit einem Kneifbereich und einem nachfolgenden Schneidbereich ausgestattet sind, wobei dieser von einer Scherklinge gebildet ist, die sich an einer in Richtung der Zangen-Schließbewegung wirksamen Mitnahmefläche der Zangenbacke abstützt und an dieser quer zur Schließbewegung mittels Spannelementen lösbar befestigt ist.

Abbruchzangen der hier angesprochenen Art werden - überwiegend als Anbauteile an Trägereinheiten wie beispielsweise Hydraulikbaggern befestigt - zum Abbruch von aus Beton oder dergleichen erstellten Bauwerken und Bauteilen eingesetzt. Das Zerstören bzw. Zerbrechen des Betons wird dabei durch von den Zangenbacken ausgeführte Kneifvorgänge bewirkt; das Zerkleinern der im Beton enthaltenen Verstärkungseinlagen (Moniereisen; U-, T- oder Doppel-T-Träger) erfolgt mittels Scherklingen, die - von den außenliegenden Endabschnitten der Zangenbacken in Richtung auf das Zangengehäuse gesehen - im Anschluß an den bereits erwähnten Kneifbereich sich gegenüberliegend lösbar an den Zangenbacken befestigt sind.
Aus der Veröffentlichung WO 89/11 910 ist eine Beton-Abbruchzange der eingangs erwähnten Gattung bekannt, deren Kneifbereich mehrere in Richtung auf die Zangen-Maulöffnung vorstehende zahnnartige Vorsprünge aufweist und deren an einer Mitnahmefläche abgestützte Scherklingen mittels Spannschrauben an den Zangenbacken befestigt sind.

Aus der EP-B1-0137 693 ist eine nur für die Zerkleinerung von Stahlrahmen geeignete Abschervorrichtung bekannt. Diese weist insofern mehrere in Längsrichtung der Scherenarme aufeinanderfolgende Klingenelemente auf, als sich an eine Quetschklinge, mittels welcher das zu zerkleinernde Werkstück zunächst in geeigneter Weise verformt wird, in Richtung auf das Scherengehäuse jeweils eine den Schneidvorgang ausführende Scherklinge anschließt. Diese kann gemäß einer besonderen Ausgestaltung zusätzlich durch ein in Richtung auf den Scherenarm vorgespanntes Keilelement gesichert sein, welches sich, seitlich an der Scherklinge anliegend, mit dieser in einer U-förmigen Ausnehmung des Scherenarms abstützt.

Der Erfindung liegt die Aufgabe zugrunde, eine für Beton oder dergleichen bestimmte Abbruchzange im Schneidbereich derart weiterzuentwickeln, daß der sich in Betrieb ergebenden Beanspruchung - auch durch ungünstige Belastungsfälle und durch Verschleiß - besser als bisher Rechnung getragen wird.

Die Aufgabe wird durch eine Abbruchzange mit den Merkmalen des Anspruchs 1 gelöst. Der Grundgedanke der Erfindung besteht darin, bei einer Abbruchzange der eingangs genannten Gattung die Scherklingen in Längsrichtung (d. h. in Richtung auf den außenliegenden Endabschnitt der Zangenbacken) mehrteilig aufzubauen und an den Zangenbacken zusätzlich über Gegenhalterungen festzuhalten, die den in Richtung der Zangen-Schließbewegung wirksamen Mitnahmeflächen entgegengerichtet und derart ausgebildet sind, daß bei der Zangen-Öffnungsbewegung an den Scherklingen auftretende Widerstandskräfte aufgenommen werden.
Die Erfindung baut dabei auf der Erkenntnis auf, daß die Scherklingen bei der Zangen-Öffnungsbewegung - hervorgerufen durch seitlich zwischen den Scherklingen eingeklemmte Bauteile - einer unerwartet hohen Beanspruchung ausgesetzt sein können; diese führt unter Umständen bereits nach einer verhältnismäßig kurzen Betriebsdauer zu einer Beschädigung oder sogar Zerstörung einzelner Spannelemente. Die sich daraus ergebende, nicht mehr ordnungsgemäße Befestigung der Scherklingen an den Zangenbacken hat vielfach auch zumindest die Beschädigung der Scherklingen und gegebenenfalls Schäden an den Zangenbacken zur Folge.
Die Gegenhalterungen nehmen die anläßlich der Zangen-Öffnungsbewegung auftretenden Widerstandskräfte auf, wodurch die Spannelemente gegen eine in dieser Richtung wirksame Beanspruchung geschützt sind.
Die Unterteilung der Scherklingen in Längsrichtung trägt der Erkenntnis Rechnung, daß diese durch den häufigen Kontakt mit dem zu zerbrechenden Material (Beton und dergleichen) in der Nähe des Kneifbereichs besonders hoch beansprucht und verschleißgefährdet sind. Diese Maßnahme dient insofern auch der Herabsetzung der Biegespannungen in den Scherklingen, als durch die Unterteilung die Hebelarme des Kraftangriffs verkürzt werden.

Vorzugsweise sind die Gegenhalterungen außerhalb des Bereichs der Spannelemente angeordnet (Anspruch 2), also beispielsweise von der Spitze der Scherklingen her in Richtung auf deren Mitnahmefläche gesehen vor oder hinter den zugehörigen Spannelementen.
Eine besonders einfache Ausführungsform läßt sich in vielen Fällen dadurch verwirklichen, daß die Gegenhalterungen - in der zuvor erwähnten Richtung gesehen - vor den Spannelementen angebracht sind (Anspruch 3).
Die Wartung der Abbruchzange läßt sich dadurch vereinfachen, daß jede Gegenhalterung derartig mehrteilig ausgebildet ist, daß die Anzahl der Gegenhalterungsabschnitte zumindest derjenigen der Segmente der daran abgestützten Scherklinge entspricht (Anspruch 4).

Bei einer besonders einfach ausgebildeten Ausführungsform des Erfindungsgegenstandes besteht jede Gegenhalterung aus einer Mehrzahl bolzenförmiger Lastaufnahmemittel, welche die Scherklinge gegen Bewegungen bezüglich der Zangenbacke quer zur Mitnahmefläche sichern (Anspruch 5).
Die Anordnung kann dabei derart getroffen sein, daß jedem Spannelement ein Lastaufnahmemittel zugeordnet ist (Anspruch 6).
Als Lastaufnahmemittel kommen beispielsweise Bolzen in Frage, die seitlich über die jeweilige Zangenbacke vorkragend lösbar oder unlösbar an dieser befestigt sind und spielfrei in angepaßte Bohrungen in den Scherklingen hineinragen. Die spielfreie Abstützung der Scherklingen läßt sich dabei auch in der Weise verwirklichen, daß die Bolzen nach Art eines Exzenters beweglich und feststellbar ausgebildet sind.
Eine besonders wirtschaftliche Ausführungsform des Erfindungsgegenstandes ist dadurch gekennzeichnet, daß das Lastaufnahmemittel als Spannhülse ausgebildet ist (Anspruch 7). Diese gestattet es, mit geringem Aufwand eine spielfreie belastbare Verbindung zwischen der Scherklinge und der Zangenbacke herzustellen bzw. diese Verbindung erforderlichenfalls zu lösen.

Der Erfindungsgegenstand kann auch in der Weise ausgestaltet sein, daß die Scherklingen an der ihrer Zangenbacke zugewandten Seite jeweils eine Anschlagfläche aufweisen, die in Richtung der Öffnungsbewegung der Zangenbacke wirksam ist und sich in dieser Richtung an zumindest einem mit der Zangenbacke verbundenen Halteelement abstützt (Anspruch 8).
Vorzugsweise ist das Halteelement über Befestigungsmittel auswechselbar an der Zangenbacke gehalten und spannt die Scherklinge gegen die Mitnahmefläche vor (Anspruch 9). Dabei kann das Halteelement insbesondere als Spannplatte ausgebildet sein, welche - an der Anlagefläche der Scherklinge anliegend - diese unter der Einwirkung von Spannschrauben an der Mitnahmefläche in Anlage hält.

Abweichend von der zuvor beschriebenen Ausführungsform kann das Halteelement auch einen von der Zangenbacke untrennbaren Bestandteil darstellen. In diesem Fall weist jedes Halteelement an der Anschlagfläche abstützbare Vorspannelemente auf, unter deren Einwirkung die betreffende Scherklinge gegen die Mitnahmefläche vorspannbar ist (Anspruch 10). Insbesondere kann das Halteelement als in Richtung auf die Scherklinge vorkragender Vorsprung ausgebildet sein, in dem Spannschrauben angebracht sind. Diese stützen sich in der Spannstellung an der Anschlagfläche der zugehörigen Scherklinge ab und halten diese dadurch an der Mitnahmefläche in Anlage.

Eine weitere vorteilhafte Ausführungsform des Erfindungsgegenstandes ist dadurch gekennzeichnet, daß jede Gegenhalterung aus einem Widerlagerkörper besteht, der gleichzeitig in eine angepaßte Ausnehmung in der Zangenbacke und in der an dieser abzustützenden Scherklinge eingreift (Anspruch 11). Der Widerlagerkörper stellt ein Baulement dar, welches - beispielsweise quer zur Richtung der Zangen-Öffnungsbewegung gesehen - zwischen Zangenbacke und Scherklinge mit geringem Spiel in der Weise ruht, daß es beim Öffnungsvorgang an der Scherklinge angreifende Widerstandskräfte aufnimmt.

Der Widerlagerkörper kann im Rahmen der Erfindung an beliebiger Stelle zwischen Zangenbacke und Scherklinge angeordnet sein, also auch außerhalb des Bereichs der zugehörigen Spannelemente.
Vorzugsweise sind jedoch zumindest einem Teil der Spannelemente Widerlagerkörper derart zugeordnet, daß durch diese jeweils zumindest ein Spannelement-Bolzen hindurchtritt (Anspruch 12). Abhängig von den baulichen Gegebenheiten und Einsatzbedingungen ist es ggf. angebracht, den Widerlagerkörper mit mehreren Durchgangsbohrungen auszustatten, durch welche Spannelement-Bolzen hindurchgeführt sind; bei einer derartigen Ausführungsform wird der Widerlagerkörper normalerweise platten- oder quaderförmig ausgebildet sein.

Um die Scherklingen ggf. wie Wendeschneidplatten einsetzen zu können, weisen sie an ihrer von der Zangenbacke abgewandten Außenseite und an der dieser zugewandten Innenseite sich paarweise gegenüberliegende, gleichartig ausgebildete Ausnehmungen auf, wobei die Widerlagerkörper in Ausnehmungen an der Zangenbacken-Innenseite eingreifen (Anspruch 13).

Der Widerlagerkörper kann an sich beliebig ausgebildet sein, soweit er mit geringem Spiel derart an Zangenbacke und Scherklinge gehalten ist, daß er die bereits erwähnten Widerstandskräfte aufnehmen kann.
Bei einer besonders zweckmäßigen Ausführungsform weisen die scheibenförmig ausgebildeten - d. h. in der Draufsicht mit einer Kreiskontur ausgestatteten - Widerlagerkörper auf ihrer der Zangenbacke zugewandten Innenseite und/oder an ihrer der Scherklinge zugewandten Außenseite eine der betreffenden Ausnehmung (in der Zangenbacke bzw. in der Scherklinge) angepaßte kegelstumpfförmige Anlagefläche auf (Anspruch 14).
Dabei ist es im Normalfall ausreichend, wenn der scheibenförmige Widerlagerkörper lediglich einseitig nach Art eines Konus ausgebildet ist, nämlich an seiner in die Scherklinge eingreifenden Außenseite.

Die Erfindung wird nachfolgend anhand mehrerer in der Zeichnung dargestellter, vorteilhafter Ausführungsbeispiele im einzelnen erläutert.
Es zeigen:
- Fig. 1: schematisiert eine Seitenansicht einer Abbruchzange, an deren Zangenbacken in Längsrichtung mehrteilig aufgebaute Scherklingen angebracht sind,
- Fig. 2: schematisiert einen Teilschnitt durch die in Fig. 1 rechts liegende Zangenbacke nebst Scherklinge,
- Fig. 3: schematisiert einen Teilschnitt durch eine Klemmbacke, deren Scherklinge zusätzlich mittels eines lösbar ausgebildeten Halteelements an der Zangenbacke abgestützt ist,
- Fig. 4: schematisiert einen Teilschnitt durch eine Zangenbacke mit einem als Vorsprung ausgebildeten Halteelement, unter dessen Einwirkung die zugehörige Scherklinge zusätzlich an der Zangenbacke abstützbar ist,
- Fig. 5: schematisiert einen Teilschnitt durch die beiden aneinander angenäherten Zangenbacken mit jeweils einer Scherklinge, die - in Richtung der Öffnungs- und Schließbewegung gesehen - nicht über die sie tragende Zangenbacke hinausragt,
- Fig. 6: nach Art einer Explosionsdarstellung in Schrägansicht einen Teil einer Scherklinge, einen einzelnen scheibenförmigen Widerlagerkörper und einen Teil einer zugehörigen Zangenbacke mit einem in diese eingesetzten Widerlagerkörper, und
- Fig. 7: einen vertikalen Teilschnitt im Bereich eines Widerlagerkörpers durch die Anordnung gemäß Fig. 6 im Einbauzustand.

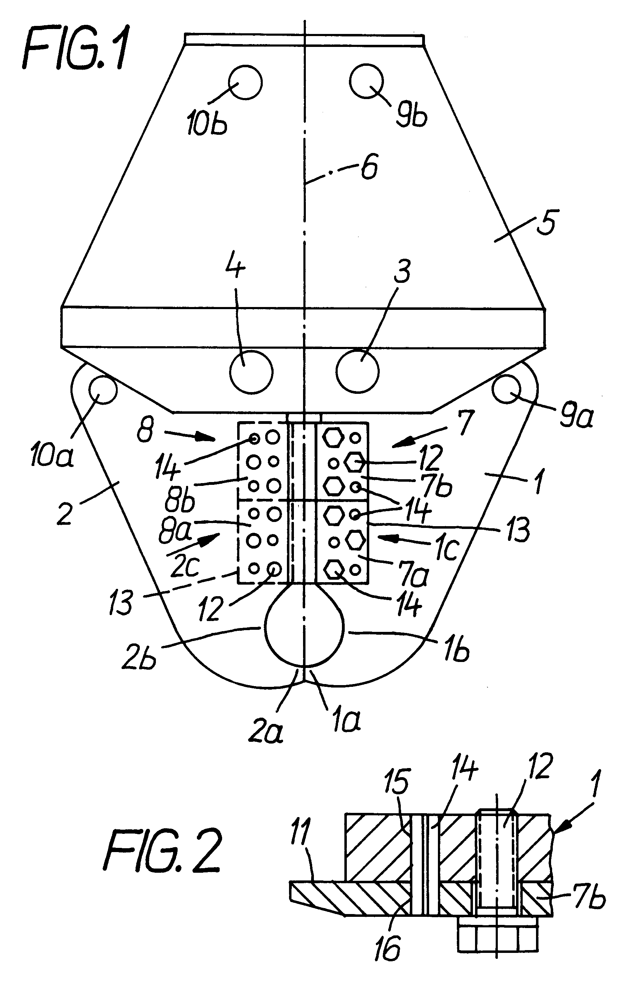

Die in Fig. 1 dargestellte Abbruchzange, die insbesondere zum Zerbrechen von Beton und dergleichen sowie zum anschließenden Zerkleinern der zugehörigen Metallteile bestimmt ist, weist zwei Zangenbacken 1 und 2 auf, die über Achsen 3, 4 an einem Gehäuse 5 schwenkbar gehalten sind.
Die Öffnungs- und Schließbewegung der beiden Zangenbacken von der Zangen-Längsachse 6 weg bzw. in Richtung auf diese zu wird mittels nicht dargestellter Zylinderaggregate hervorgerufen, die einerseits über Schwenkachsen 9a, 10a mit den Zangenbacken und andererseits über Schwenkachsen 9b, 10b mit dem Gehäuse 5 in Verbindung stehen.

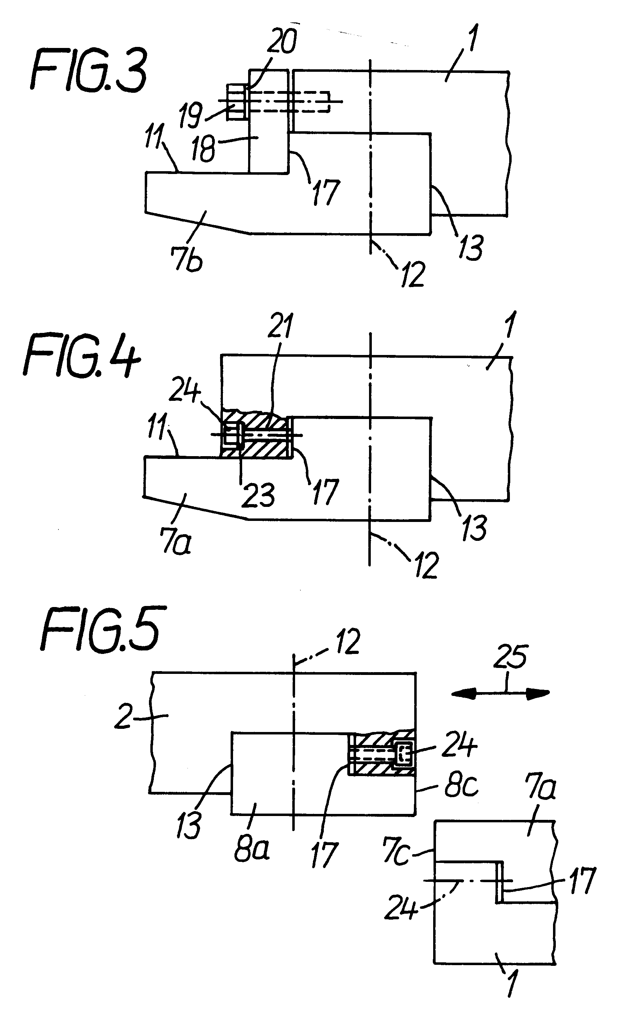

Die außenliegenden Endabschnitte der Zangenbacken 1, 2 weisen einen zahnartigen Vorsprung 1a bzw. 2a auf, welcher in Richtung auf die Zangen-Längsachse 6 vorkragt und über den sich die Zangenbacken in der dargestellten Schließstellung aneinander abstützen.
An den Vorsprung 1a bzw. 2a schließen sich in Richtung auf das Gehäuse 5 aufeinanderfolgend ein Kneifbereich 1b bzw. 2b und ein Schneidbereich 1c bzw. 2c an. Letzterer wird jeweils von einer zweiteiligen Scherklinge 7 bzw. 8 mit in Richtung der Zangen-Längsachse 6 aufeinanderfolgenden Segmenten 7a, b bzw. 8a, b gebildet.
Die Scherklingen 7, 8 bzw. deren Segmente 7a, b und 8a, b sind in der Draufsicht, d. h. von oben auf die Abbruchzange gesehen, gegeneinander versetzt angeordnet: Im Gegensatz zu den Segmenten 8a, b liegen die Segmente 7a, b an der den Betrachter zugewandten Seite der Zangenbacke 1.
Der mit einer gerundeten Kante ausgebildete Kneifbereich 1b bzw. 2b dient dazu, Beton oder dergleichen durch einen Kneifvorgang zu zerstören, bevor anschließend die dann freigelegten Metallteile durch eine Relativbewegung bezüglich der Abbruchzange in den Bereich der Scherklingen 7, 8 gebracht und durch deren Einwirkung zerkleinert werden.
Die zur Zerkleinerung der Metallteile ausgeführte Schließbewegung führt unter Umständen dazu, daß sich Metallteile zwischen den aneinander zugewandten Seitenflächen (vgl. die Seitenfläche 11 des in Fig. 2 beispielhaft dargestellten Segments 7b der Scherklinge 7) festklemmen, so daß die Scherklingen 7, 8 während der Öffnungsbewegung unter Umständen erhebliche, dieser entgegengerichtete Widerstandskräfte überwinden müssen. Diese bewirken, daß die als Spannelemente dienenden Sechskantschrauben 12, über welche die Segmente der Scherklingen 7, 8 an der jeweils zugehörigen Zangenbacke 1 bzw. 2 in Querrichtung befestigt sind, durch hohe Beanspruchung unzulässig verformt, beschädigt oder sogar zerstört werden; dies deshalb, weil die üblicherweise vorhandenen Mitnahmeflächen 13 zur Abstützung der Scherklingen an der zugehörigen Zangenbacke 1 bzw. 2 lediglich in Richtung der Schließbewegung wirksam sind (vgl. dazu Fig. 3 und 4).

Um die zuvor angesprochenen Nachteile zu vermeiden, die beispielsweise das Auswechseln der Segmente 7a, b und 8a, b erschweren können, sind erfindungsgemäß zusätzlich Gegenhalterungen vorgesehen, die den Mitnahmeflächen 13 entgegengerichtet und derart ausgebildet sind, daß bei der Zangen-Öffnungsbewegung an den Scherklingen 7, 8 auftretende Widerstandskräfte von den Zangenbacken aufgenommen werden.

Bei der in Fig. 1 und 2 dargestellten Ausführungsform bestehen die Gegenhalterungen aus Spannhülsen 14, die sich unter Vorspannung gleichzeitig in Bohrungen 15 und 16 der Zangenbacke und des zugehörigen Segments abstützen und dadurch die beiden genannten Teile spielfrei miteinander verbinden.
Die in dieser Weise ausgebildete Gegenhalterung liegt - wie beispielsweise Fig. 2 erkennen läßt - außerhalb und - von der Spitze der Scherklinge her in Richtung auf deren Mitnahmefläche gesehen - vor der Sechskantschraube 12.
Gemäß Fig. 1 kann die Anordnung so getroffen sein, daß jeder Sechskantschraube 12 jeweils eine Gegenhalterung in Gestalt einer Spannhülse 14 zugeordnet ist, wobei die Reihenfolge der Teile 12 und 14 - bezogen auf die Zangen-Längsachse 6 - in Längsrichtung der Segmente 7a, b bzw. 8a, b wechselt. Falls also ein Segment in Längsrichtung gesehen mehrere Sechskantschrauben 12 und Spannhülsen 14 aufweist, liegt wechselweise eines dieser beiden Teile der Zangen-Längsachse 6 näher als das andere.
Durch die mittels der Spannhülsen 14 zusätzlich bewirkte Abstützung der Segmente 7a, b bzw. 8a, b an der zugehörigen Zangenbacke 1 bzw. 2 erfahren die Sechskantschrauben 12 insofern eine Entlastung, als die Spannhülsen der Zangen-Öffnungsbewegung entgegengerichtete Widerstandskräfte aufnehmen.

Abweichend von der in Fig. 1 und 2 dargestellten Ausführungsform können die Gegenhalterungen auch andersartig ausgebildet sein; insbesondere können sie auch aus Vorsprüngen bestehen, die - von der Zangenbacke oder dem zugehörigen Segment ausgehend - seitlich in Richtung auf das jeweils andere Teil vorkragen. Wesentlich im Hinblick auf die ordnungsgemäße Funktion der Gegenhalterungen ist es dabei, daß diese das Segment und die Zangenbacke im Hinblick auf die erwähnten Widerstandskräfte möglichst spielfrei miteinander verbinden.

Der Erfindungsgegenstand kann - gemäß Fig. 3 und 4 - auch in der Weise ausgestaltet sein, daß die Scherklingen an der ihrer Zangenbacke zugewandten Seite (Seitenfläche 11) jeweils eine Anschlagfläche 17 aufweisen; diese ist in Richtung der Öffnungsbewegung der Zangenbacke (d. h. in Fig. 3 und 4 nach rechts) wirksam und stützt sich in dieser Richtung an zumindest einem mit der Zangenbacke verbundenen Halteelement ab.

Bei der Ausführungsform des Erfindungsgegenstandes gemäß Fig. 3 ist das Halteelement als Spannplatte 18 ausgebildet, welche - an der Anlagefläche 17 des beispielhaft dargestellten Segments 7b anliegend - über mehrere senkrecht zur Zeichenebene angeordnete Spannschrauben 19 nebst Sicherungsscheiben 20 an der Zangenbacke 1 lösbar befestigt ist. Durch Anziehen der Spannschrauben 19 wird das Segment 17 gegen die Mitnahmefläche 13 vorgespannt, wobei die Spannplatte 18 bei der Zangen-Öffnungsbewegung auf das Segment 7b einwirkende Widerstandskräfte aufnimmt und auf die Zangenbacke 1 überträgt.
Die lösbare Befestigung der Spannplatte 18 gestattet es, diese erforderlichenfalls aus einem besonders verschleißfesten Werkstoff herzustellen und sie im Falle der Beschädigung auszuwechseln.
Ein weiterer Vorteil dieser Ausgestaltung ist darin zu sehen, daß unterschiedlich ausgebildete Spannplatten und damit Segmente mit unterschiedlichen Formen und Abmessungen zur Anwendung kommen können.

Bei der Ausführungsform gemäß Fig. 4 stellt das Halteelement zur Abstützung des beispielhaft dargestellten Segments 7a einen Vorsprung 21 dar, der untrennbarer Bestandteil der Zangenbacke 1 ist und in Richtung auf die Seitenfläche 11 des Segments vorkragt.
Der Vorsprung ist bezüglich der Mitnahmefläche 13 derart angeordnet, daß das Segment 7a mit Spiel (in der Darstellung nach links oder rechts) eingesetzt werden kann.
Die Aufnahme der bereits erwähnten Widerstandskräfte erfolgt über mehrere senkrecht zur Zeichenebene angeordnete, mit Sicherungsscheiben 23 ausgestattete Innensechskantschrauben 24. Diese sind versenkt und drehbar innerhalb des Vorsprungs 21 gehalten und stützen sich in der dargestellten Spannstellung an der Anschlagfläche 17 in der Weise ab, daß das Segment 7a gegen die Mitnahmefläche 13 vorgespannt ist.
Auch diese Ausführungsform ermöglicht es also, durch Verwendung stufenlos einstellbarer Innensechskantschrauben 24 das betreffende Segment der Scherklinge spielfrei an der zugehörigen Zangenbacke in Anlage zu halten, so daß die als Spannelement dienenden Sechskantschrauben 12 auch in der Richtung keine Belastung aufnehmen müssen, in welcher die zugehörige Mitnahmefläche 13 nicht wirksam ist.

Beide Ausführungsformen gemäß Fig. 3 und 4 stimmen insofern überein, als ihre Gegenhalterungen (den Segmenten der Scherklingen zugeordnete Spannplatten 18 nebst Zubehör bzw. Vorsprünge 21 nebst Zubehör) - von der Spitze der betreffenden Scherklinge 7 bzw. 8 (vgl. dazu Fig. 1) her in Richtung auf deren Mitnahmefläche gesehen - vor den als Spannelementen dienenden Sechskantschrauben 12 angebracht sind.

Die Verwendung mehrteilig ausgebildeter Scherklingen ermöglicht es, erforderlichenfalls nur die einem höheren Verschleiß ausgesetzten Segmente auszuwechseln. Darüberhinaus können die Segmente der Scherklingen ihrer unterschiedlichen Beanspruchung entsprechend aus Werkstoffen mit unterschiedlichen Eigenschaften gefertigt sein. Unter diesem Gesichtspunkt sollten die dem Kneifbereich 1b bzw. 2b benachbarten Segmente 7a bzw. 8a aus einem Werkstoff mit höherer Verschleißfestigkeit bestehen als die in der Nähe des Gehäuses 5 angeordneten Segmente 7b und 8b.

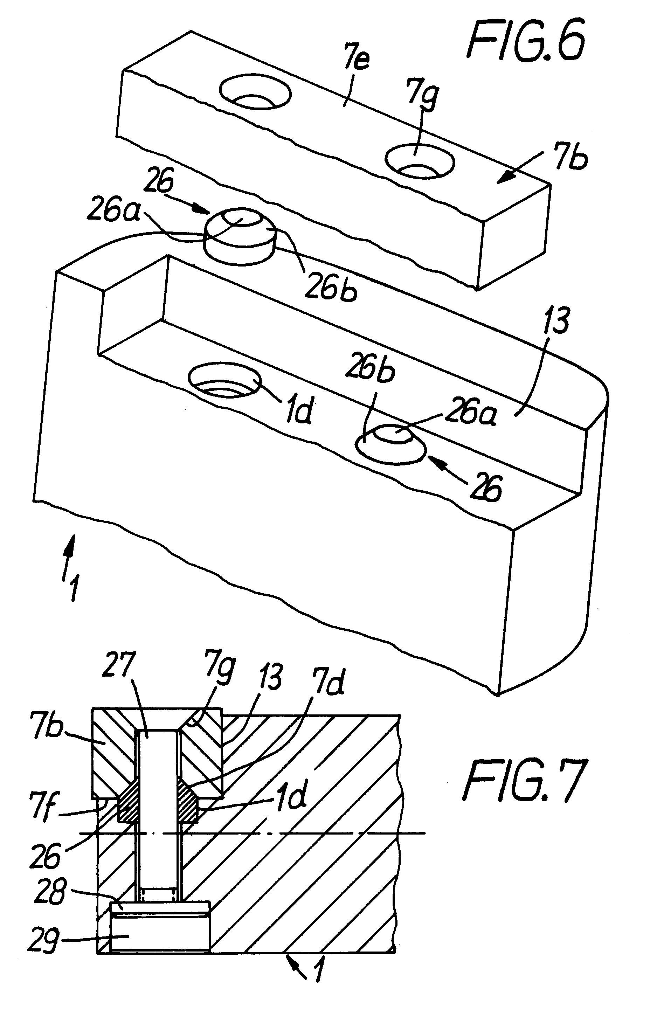

Um eine zusätzliche Beanspruchung der Scherklingen quer zur Öffnungs- und Schließbewegung (Pfeil 25 in Fig. 5) auszuschließen, sind die Segmente der Scherklingen zweckmäßig in der Weise ausgebildet und an den Zangenbacken gehalten, daß sie - abweichend von den lediglich als Schemabild zu verstehenden Darstellungen gemäß Fig. 2 bis 4 - allenfalls geringfügig in Richtung des Doppelpfeils 25 über die zugehörige Zangenbacke hinausragen.
Bei der Ausführungsform gemäß Fig. 5 schließen die Stirnflächen 7c und 8c der beispielhaft dargestellten Segmente 7a und 8a in der genannten Richtung mit der Zangenbacke 1 bzw. 2 ab.
Die der Abstützung der Anlageflächen 17 dienenden Innensechskantschrauben 24 liegen (ebenso wie die Innensechskantschrauben 24 in Fig. 4) vollständig innerhalb der Zangenbacke 1 bzw. 2.

Abweichend von den bisher beschriebenen Ausführungsformen werden bei der Anordnung gemäß Fig. 6 und 7 - beispielhaft dargestellt für die Zangenbacke 1 und ein Segment 7b der Scherklinge 7 - die bei der Öffnungsbewegung auftretenden Widerstandskräfte von zwei getrennte Bauteile darstellenden, scheibenförmigen Widerlagerkörpern 26 aufgenommen, die gleichzeitig mit geringem Spiel in angepaßte Ausnehmungen 1d bzw. 7d in der Zangenbacke 1 und in dem Segment 7b eingreifen. Jedem Widerlagerkörper 26 ist - außerhalb der Mitnahmefläche 13 liegend und senkrecht zu dieser verlaufend - ein Spannelement zugeordnet, dessen Senkkopfschraube 27 durch die Längsbohrung 26a des betreffenden Widerlagerkörpers hindurchtritt (vgl. Fig. 7). Die Senkkopfschraube ist auf der von dem Segment 7b abgewandten Seite der Zangenbacke 1 unter Zwischenschaltung einer Federscheibe 28 mittels einer Rundmutter 29 festgehalten.

Um das Umsetzen des Segments 7b nach Art einer Wendeschneidplatte zu ermöglichen, weist dieses an der von der Zangenbacke 1 abgewandten Außenseite 7e und an der dem Teil 1 zugewandten Innenseite 7f sich paarweise gegenüberliegende, gleichartig ausgebildete Ausnehmungen 7d und 7g auf, wobei der Widerlagerkörper 26 in die an ihn angepaßten Ausnehmungen 7d eingreift und dadurch das Segment 7b bezüglich der Zangenbacke 1 arretiert.

Bei dem in Rede stehenden bevorzugten Ausführungsbeispiel sind die Widerlagerkörper lediglich auf ihrer dem Segment 7b zugewandten Außenseite nach Art eines Konus ausgebildet, d. h. sie weisen dort eine kegelstumpfförmige Anlagefläche 26b auf. Diese ist unter dem Gesichtspunkt der bereits erwähnten Umsetzbarkeit an die Ausnehmungen 7d und 7g des Segments 7b angepaßt.
Außerhalb des Bereichs der Anlagefläche 26b sind die Widerlagerkörper - in Anpassung an die Form der Bohrungen 1d - zylindrisch ausgebildet.

Unter dem Gesichtspunkt der Selbstzentrierung der Widerlagerkörper 26 in der zugehörigen Zangenbacke und der zugehörigen Segmente können die Widerlagerkörper - zumindest zum Teil - auch in der Weise ausgebildet sein, daß sie beidseitig kegelstumpfförmige Anlageflächen aufweisen. Dies hat zur Folge, daß - abweichend von der Darstellung in Fig. 6 und 7 - auch die Ausnehmungen 1d in der Zangenbacke 1 im Bereich des zugehörigen Widerlagerkörpers 26 kegelstumpfförmig ausgebildet sind.

## Patentansprüche

1. Abbruchzange mit relativ zueinander beweglich angetriebenen Zangenbacken (1, 2), deren außenliegender Endabschnitt jeweils zumindest einen in Richtung auf die gegenüberliegende Zangenbacke weisenden Vorsprung (1a, 2a) aufweist und die im Anschluß daran jeweils mit einem Kneifbereich (1b, 2b) und einem nachfolgenden Schneidbereich (1c, 2c) ausgestattet sind, wobei dieser von einer Scherklinge gebildet ist, die sich an einer in Richtung der Zangen-Schließbewegung wirksamen Mitnahmefläche (13) der Zangenbacke abstützt und an dieser quer zur Schließbewegung mittels Spannelementen (12) lösbar befestigt ist, **dadurch gekennzeichnet,** daß die Scherklingen (7, 8) in Längsrichtung mehrteilig (Segmente 7a, b bzw. 8a, b) aufgebaut und an den Zangenbacken (1, 2) zusätzlich zu den Spannelementen (12) über Gegenhalterungen (14; 18; 21) festgehalten sind, die den Mitnahmeflächen (13) entgegengerichtet und derart ausgebildet sind, daß bei der Zangen-Öffnungsbewegung an den Scherklingen (7, 8) auftretende Widerstandskräfte aufgenommen werden.

2. Vorrichtung nach Anspruch 1, dadurch gekennzeichnet, daß die Gegenhalterungen (14; 18; 21) außerhalb des Bereichs der Spannelemente (12) angeordnet sind.

3. Vorrichtung nach zumindest einem der vorhergehenden Ansprüche, dadurch gekennzeichnet, daß die Gegenhalterungen (14; 18; 21) - von der Spitze der Scherklingen (7, 8) her in Richtung auf deren Mitnahmefläche (13) gesehen - vor den Spannelementen (12) angebracht sind.

4. Vorrichtung nach zumindest einem der vorhergehenden Ansprüche, dadurch gekennzeichnet, daß jede Gegenhalterung (14; 18; 21) derart mehrteilig ausgebildet ist, daß die Anzahl der Gegenhalterungsabschnitte zumindest derjenigen der Segmente (7a, b, bzw. 8a, b) der daran abgestützten Scherklinge (7 bzw. 8) entspricht.

5. Vorrichtung nach zumindest einem der vorhergehenden Ansprüche, dadurch gekennzeichnet, daß jede Gegenhalterung aus einer Mehrzahl bolzenförmiger Lastaufnahmemittel (14) besteht, welche die Scherklinge (7 bzw. 8) gegen Bewegungen bezüglich der Zangenbacke (1 bzw. 2) quer zur Mitnahmefläche (13) sichern.

6. Vorrichtung zumindest nach Anspruch 5, dadurch gekennzeichnet, daß jedem Spannelement (12) ein Lastaufnahmemittel (14) zugeordnet ist.

7. Vorrichtung zumindest nach Anspruch 5 oder 6, dadurch gekennzeichnet, daß das Lastaufnahmemittel als Spannhülse (14) ausgebildet ist.

8. Vorrichtung nach zumindest einem der Ansprüche 1 bis 3, dadurch gekennzeichnet, daß die Scherklingen (7, 8) an der ihrer Zangenbacke (1 bzw. 2) zugewandten Seite (Seitenfläche 11) jeweils eine Anschlagfläche (17) aufweisen, die in Richtung der Öffnungsbewegung der Zangenbacke (1 bzw. 2) wirksam ist und sich in dieser Richtung an zumindest einem mit der Zangenbacke verbundenen Halteelement (18 bzw. 21) abstützt.

9. Vorrichtung nach Anspruch 8, dadurch gekennzeichnet, daß das Halteelement (18) über Befestigungsmittel (19) auswechselbar an der Zangenbacke (1 bzw. 2) gehalten ist und die Scherklinge (7 bzw. 8) gegen die Mitnahmefläche (13) vorspannt.

10. Vorrichtung nach Anspruch 8 mit einem Halteelement (21), das einen von der Zangenbacke (1 bzw. 2)untrennbaren Bestandteil darstellt, **dadurch gekennzeichnet,** daß jedes Halteelement (21) an der Anschlagfläche (17) abstützbare Vorspannelemente (24) aufweist, unter deren Einwirkung die betreffende Scherklinge (7 bzw. 8) gegen die Mitnahmefläche 13 vorspannbar ist.

11. Vorrichtung nach Anspruch 1, dadurch gekennzeichnet, daß jede Gegenhalterung aus einem Widerlagerkörper (26) besteht, der gleichzeitig in eine angepaßte Ausnehmung (1d bzw. 7d) in der Zangenbacke (1) und in der Scherklinge (7) eingreift.

12. Vorrichtung nach Anspruch 11, dadurch gekennzeichnet, daß zumindest einem Teil der Spannelemente (27 bis 29) Widerlagerkörper (26) derart zugeordnet sind, daß durch diese jeweils ein Spannelement-Bolzen (Senkkopfschraube 27) hindurchtritt.

13. Vorrichtung nach Anspruch 12, dadurch gekennzeichnet, daß die Scherklingen (7) an der von ihrer Zangenbacke (1) abgewandten Außenseite und an der dieser zugewandten Innenseite (7f) paarweise gegenüberliegende, gleichartig ausgebildete Ausnehmungen (7d, 7g) aufweisen, wobei die Widerlagerkörper (26) in Ausnehmungen (7d) an der Zangenbacken-Innenseite eingreifen.

14. Vorrichtung nach zumindest einem der Ansprüche 11 bis 13, dadurch gekennzeichnet, daß die scheibenförmig ausgebildeten Widerlagerkörper (26) an ihrer der Zangenbacke (1) zugewandten Innenseite und/oder an ihrer der Scherklinge (7) zugewandten Außenseite eine der betreffenden Ausnehmung (7d) angepaßte kegelstumpfförmige Anlagefläche (26b) aufweisen.

## Claims

1. Breaking tool with pincer jaws (1, 2) driven to move relative to one another, the external end section of which respectively has at least one projection (1a, 2a) pointing towards the opposite pincer jaw and which connecting thereto are respectively equipped with a nipping area (1b, 2b) and an adjoining cutting area (1c, 2c), this being formed by a shearing blade which is supported on a carrying face (13) of the pincer jaw active in the direction of the closing movement of the pincers and is detachably fastened to this transversely to the closing movement by means of clamping elements (12), characterised in that the shearing blades (7, 8) are of multipart construction in longitudinal direction (segments 7a, b or 8a, b) and are fixed on the pincer jaws (1, 2) additionally to the clamping elements (12) by means of abutting means (14; 18; 21), which are directed against the carrying faces (13) and are constructed in such a way that resistance forces occurring at the shearing blades (7, 8) during the opening movement of the pincers are absorbed.

2. Tool according to Claim 1, characterised in that the abutting means (14; 18; 21) are arranged outside the region of the clamping elements (12).

3. Tool according to at least one of the preceding claims, characterised in that the abutting means (14; 18; 21) are attached in front of the clamping elements (12) - as viewed from the tip of the shearing blades (7, 8) towards their carrying face (13).

4. Tool according to at least one of the preceding claims, characterised in that each abutting means (14; 18; 21) is of multipart construction so that the number of sections of the abutting means corresponds at least to that of the segments (7a, b or 8a, b) of the shearing blade (7 or 8 respectively) supported thereon.

5. Tool according to at least one of the preceding claims, characterised in that each abutting means comprises a plurality of bolt-like load-bearing means (14) which secure the shearing blade (7 or 8) transversely to the carrying face (13) against movements relative to the pincer jaw (1 or 2 respectively).

6. Tool at least according to Claim 5, characterised in that a load-bearing means (14) is allocated to each clamping element (12).

7. Tool at least according to Claim 5 or 6, characterised in that the load-bearing means is constructed as a clamping sleeve (14).

8. Tool according to at least one of Claims 1 to 3, characterised in that on the side (side face 11) facing their pincer jaw (1 or 2), the shearing blades (7, 8) have a respective stop face (17) which is active in the direction of the opening movement of the pincer jaw (1 or 2) and is supported in this direction on at least one holding element (18 or 21 respectively) connected to the pincer jaw.

9. Tool according to Claim 8, characterised in that the holding element (18) is replaceably held on the pincer jaw (1 or 2) by means of fasteners (19) and pre-stresses the shearing blade (7 or 8) against the carrying face (13).

10. Tool according to Claim 8 with a holding element (21) constituting an inseparable component of the pincer jaw (1 or 2), characterised in that each holding element (21) has pre-stressing elements (24), which may be supported on the stop face (17) and the action of which enables the respective shearing blade (7 or 8) to be pre-stressed against the carrying face (13).

11. Tool according to Claim 1, characterised in that each abutting means comprises an abutment member (26), which engages simultaneously into an adapted recess (1d or 7d) in the pincer jaw (1) and in the shearing blade (7).

12. Tool according to Claim 11, characterised in that abutment members (26) are allocated to at least some of the clamping elements (27 to 29) so that at least one clamping element screwbolt (countersunk screwbolt 27) passes respectively through them.

13. Tool according to Claim 12, characterised in that the shearing blades (7) have identically constructed recesses (7d, 7g) arranged opposite one another in pairs on their outer side facing away from their pincer jaw (1) and on the inner side (7f) facing this, and the abutment members (26) engage in recesses (7d) on the inner side of the pincer jaws.

14. Tool according to at least one of Claims 11 to 13, characterised in that the disc-shaped abutment members (26) have a truncated cone-shaped abutment surface (26b) adapted to the corresponding recess (7d) on their inner side facing the pincer jaw (1) and/or on their outer side facing the shearing blade (7).

## Revendications

1. Pince de démolition comportant des mâchoires de pince (1, 2) qui sont entraînées en mouvement l'une par rapport à l'autre, dont chaque partie d'extrémité située à l'extérieur présente au moins une saillie (1a, 2a) tournée vers la mâchoire de pince placée en face et qui, à côté de ces saillies, sont réalisées chacune avec une zone formant tenaille (1b, 2b), avec, à la suite, une zone coupante (1c, 2c), étant entendu que cette zone coupante est formée d'une lame de cisaillement qui s'appuie sur une surface d'appui (13) de la mâchoire de pince agissant dans la direction du mouvement de fermeture de la mâchoire de pince et est fixée à celle-ci, perpendiculairement au mouvement de fermeture, au moyen d'un organe de serrage (12), avec possibilité de démontage,
caractérisé en ce que
les lames de cisaillement (7, 8) sont montées en plusieurs parties dans la direction longitudinale (segments 7a, b et respectivement 8a, b) et sont fixées sur les mâchoires de pince (1, 2), en plus des organes de serrage (12), au moyen de contre-fixations (14; 18; 21), qui sont dirigées en sens contraire des surfaces d'appui (13) et sont réalisées de façon à reprendre, au cours du mouvement d'ouverture de la pince, des efforts de réaction apparaissant sur les lames (7, 8).

2. Dispositif suivant la revendication 1, caractérisé en ce que les contre-fixations (14; 18; 21) sont disposées en dehors de la zone des organes de serrage (12).

3. Dispositif d'après au moins l'une des revendications précédentes, caractérisé en ce que les contre-fixations (14; 18; 21) sont placées en avant des organes de serrage (12) - en regardant depuis la pointe des lames (7, 8), dans la direction de leur surface d'appui (13).

4. Dispositif d'après au moins l'une des revendications précédentes, caractérisé en ce que chaque contre-fixation (14; 18; 21) est réalisée en plusieurs parties de telle façon que le nombre des éléments de contre-fixation corresponde à celui des segments (respectivement 7a, b et 8a, b) des lames de cisaillement (7, 8) qui s'y appuient.

5. Dispositif d'après au moins l'une des revendications précédentes, caractérisé en ce que chaque contre-fixation est constituée d'une multiplicité de moyens de reprise de la charge (14), sous la forme de tourillons, qui empêchent les lames de cisaillement (7, 8) de se déplacer par rapport aux mâchoires de pince (respectivement 1, 2) perpendiculairement à la surface d'appui (13).

6. Dispositif au moins suivant la revendication 5, caractérisé en ce qu'à chaque organe de serrage (12) est associé un moyen de reprise de la charge (14).

7. Dispositif suivant la revendication 5 ou la revendication 6, caractérisé en ce que le moyen de reprise de la charge (14) est réalisé sous la forme d'une douille de serrage (14).

8. Dispositif d'après au moins l'une des revendications 1 à 3 , caractérisé en ce que les lames de cisaillement (7, 8) présentent sur leur face (face latérale 11) tournée vers leur mâchoire de pince (1, 2) chaque fois une surface de butée (17), agissant dans la direction du mouvement d'ouverture des mâchoires de pince (1, 2) et qui s'appuie, dans cette direction, sur au moins un organe de maintien (respectivement 18 ou 21), relié à la mâchoire de pince.

9. Dispositif suivant la revendication 8, caractérisé en ce que l'organe de maintien (18) est fixé, de façon à être interchangeable, sur la mâchoire de pince (respectivement 1, 2), par des moyens de fixation (19), et la lame de cisaillement (7 ou 8) est soumise à une précontrainte contre la surface d'appui (13).

10. Dispositif suivant la revendication 8, comportant un organe de maintien (21) qui constitue une pièce inséparable de la mâchoire de pince (respectivement 1 et 2), caractérisé en ce que chaque organe de maintien (21) sur la surface de butée (17) présente des organes de précontrainte (24) en appui, sous l'effet desquels la lame de cisaillement concernée (respectivement 7 ou 8) peut être précontrainte contre la surface d'appui (13).

11. Dispositif suivant la revendication 1, caractérisé en ce que chaque contre-fixation est constituée d'un corps de réaction (26) qui fait prise en même temps dans un évidement (respectivement 1d ou 7d) situé dans la mâchoire de pince (1) et dans la lame de cisaillement (7).

12. Dispositif suivant la revendication 11, caractérisé en ce qu'à au moins une partie des organes de serrage (27 à 29), sont associés des corps de réaction (26), de telle façon qu'une broche d'organe de serrage (vis à tête fraisée 27) traverse chacun de ceux-ci.

13. Dispositif suivant la revendication 12, caractérisé en ce que les lames de cisaillement (7) présentent, sur leur face extérieure située à l'opposé de leur mâchoire de pince (1) et sur leur face intérieure (7f) tournée vers cette mâchoire de pince, des évidements (7d, 7g) réalisés identiques et situés par paire les uns en face des autres, étant entendu que les corps de réaction (26) font prise dans des évidements (7d) sur la face intérieure des mâchoires de pince.

14. Dispositif d'après au moins l'une des revendications 11 à 13, caractérisé en ce que les corps de réaction (26) réalisés en forme de disques présentent, sur leur face intérieure tournée vers la mâchoire de pince (1), et/ou, sur leur face extérieure tournée vers la lame de cisaillement (7), une surface de contact (26b) en forme de tronc de cône, adaptée à l'évidement concerné (7d).
